# EUROPÄISCHE PATENTSCHRIFT

(11) **EP 3 475 103 B1**
(45) Veröffentlichungstag und Bekanntmachung des Hinweises auf die Patenterteilung: **06.05.2020**
(21) Anmeldenummer: 17714415.1
(22) Anmeldetag: 27.03.2017
(51) Int. Cl.: B60C 11/03, B60C 11/04, B60C 11/13

(54) **FAHRZEUGLUFTREIFEN**
PNEUMATIC VEHICLE TYRE
PNEUMATIQUE DE VÉHICULE

(30) Priorität: 22.06.2016 DE 102016211108
(43) Veröffentlichungstag der Anmeldung: 01.05.2019
(73) Patentinhaber: Continental Reifen Deutschland GmbH, 30165 Hannover (DE)
(72) Erfinder: LUTZ, André, 30167 Hannover (DE); KRISTEN, Florian, 30171 Hannover (DE)
(74) Vertreter: Finger, Karsten
(86) Internationale Anmeldenummer: PCT/EP2017/057160
(87) Internationale Veröffentlichungsnummer: WO 2017/220222

(56) Entgegenhaltungen:
- EP-A1- 2 078 623
- WO-A1-2013/148355
- JP-A- 2001 030 718
- US-A1- 2007 062 626

## Beschreibung

Die Erfindung betrifft einen Fahrzeugluftreifen - insbesondere Nutzfahrzeugreifen - mit einem Laufstreifenprofil mit Profilbändern, welche durch Umfangsrillen voneinander getrennt sind, wobei die Umfangsrillen jeweils in radialer Richtung R nach innen hin von einem Rillengrund und beiderseits des Rillengrundes durch eine Rillenwand begrenzt wird, wobei die beiden durch die Umfangsrille getrennten Profilbänder in radialer Richtung R nach außen hin durch eine die Straßenkontaktfläche bildende radial äußere Oberfläche und in axialer Richtung A zur Umfangsrille hin jeweils durch eine Flanke begrenzt wird, welche sich in radialer Richtung R vom Rillengrund bis zur radial äußeren Oberfläche erstreckt und eine Rillenwand der Umfangsrille bildet, wobei im Rillengrund zumindest einer Umfangsrille in Umfangsrichtung U hintereinander angeordnete erste Gummiblöcke und in Umfangsrichtung U hintereinander angeordnete zweite Gummiblöcke ausgebildet sind, wobei die ersten Gummiblöcke in der Flanke des ersten Profilblockbandes und die zweiten Gummiblöcke in der Flanke des zweiten Probfilblockbandes angebunden sind.

Derartige Fahrzeugluftreifen sind bekannt.

Aus der EP 2078623 B1 ist bekannt, in breiten Umfangsrillen eines Fahrzeugluftreifens im Rillengrund zwei axial voneinander beabstandete, über den Umfang des Reifens erstreckte Reihen von Gummiblöcken auszubilden, wobei die Gummiblöcke der einen Reihe an der Flanke der einen, die Umfangsrille begrenzenden Umfangsrippe und im Rillengrund und die Gummiblöcke der anderen Reihe an der Flanke der anderen, die Umfangsrille begrenzenden Umfangsrippe und im Rillengrund angebunden sind. Die Blöcke der einen Reihe sind so weit axial von den Blöcken der anderen Reihe beabstandet, dass zwischen den beiden Reihen auch im Rillengrund eine gradlinig in Umfangsrichtung erstreckte Umfangsrille voll ausgebildet verbleibt. Innerhalb einer Reihe sind die Gummiblöcke in Umfangsrichtung dicht hintereinander angeordnet, so dass hierdurch das Eindringen von Steinen in den Bereich des Rillengrundes behindert und der Auswurf erleichtert wird. Bei sehr breiten Umfangsrillen kann der Steinauswurf hierdurch ermöglicht werden. Bei sehr breiten Umfangsrillen kann der zwischen den Gummiblockreihen ausgebildete, geradlinige Kanal die Aufnahme und den Durchschluss von Wasser ermöglichen. Bei sehr breiten Rillen ist eine derartige Ausbildung somit möglicherweise umsetzbar. Die Umfangsrille bleibt über eine lange Lebensdauer mit ihrem äußeren Erstreckungsabschnitt gradlinig erstreckt. Allerdings verbleibt im Rillengrund auch bei breiten Umfangsrillen zwischen den beiden Gummiblockreihen nur eine kurze Umfangsrille mit wenigen wirksamen Griffkanten. Somit wird mit zunehmender Lebensdauer auch bei einer breiten Umfangsrille die Aufnahmekapazität von Wasser massiv eingeschränkt. Hierdurch werden die Nassgriffeigenschaften massiv negativ beeinflusst, ohne diesen durch wirksame Griffkanten entgegenzuwirken. Bei Umfangsrillen, die nicht besonders breit ausgebildet werden, wird die Wasseraufnahmekapazität einer zwischen den Reihen verbleibenden Rille und die Ausbildung verbleibender Griffkanten weiter zusätzlich erschwert und die Nassgriffeignung somit weiter deutlich reduziert. Darüber hinaus ist eine solche Ausbildung bei sehr schmalen Umfangsrillen auch schwer herstellbar. Somit ist eine derartige Ausbildung von Umfangsrillen nur bei Rillen mit sehr breitem Rillengrund sinnvoll umsetzbar.

Wird eine derartige Umfangsrille mit im Querschnitt üblicherweise geneigten Flanken V-förmig ausgebildet, wird die Umfangsrille im Bereich der radial äußeren Oberfläche noch weiter deutlich verbreitet. Eine zu große Breite in der radial äußeren Oberfläche beeinträchtigt jedoch zusätzlich die Lebensdauer des Reifens und beeinflusst negativ den Rollwiderstand. Wird abweichend von der üblichen V-Form die Umfangsrillen mit sehr steilen, kaum geneigten Flanken ausgebildet, kann zwar dieser zusätzliche Effekt verhindert werden, allerdings erleichtern derartige steil ausgebildete Flanken das Hängenbleiben von eindringenden Steinen in der Umfangsrille, sodass die Steine trotz der Reihen mit Gummiblöcken langsam in den Rillengrund eindringen können.

Aus der DE 10 2007 016 930 A1 ist es bekannt, Umfangsrillen mit pyramidenartig ausgebildeten Körpern auszubilden, welche sich über einen großen radialen Erstreckungsbereich der Rille erstrecken und alternierend in der einen oder anderen Flanke ausgebildet sind. Diese Ausbildungen ermöglichen einen guten Steinauswurf und eine Wellenlinienform der wirksamen Umfangsrille über ihre wesentliche radiale Erstreckung und somit über ihre wesentliche Lebensdauer. Hierdurch kann mit zunehmender Lebensdauer auch eine lange, wirksame Umfangsrille zur Aufnahme und Ableitung des Wassers bereitgestellt werden. Die Wellenform ist somit für den Ablauf des Wassers günstig. Die Ausbildung ermöglicht darüber hinaus auch einen guten Schutz gegen Eindringen und ein einfaches Auswerfen von eingedrungenen Steinen. Die Wellenform der Umfangsrille längs der gesamten Tiefenerstreckung der Umfangsrille kann bei für Langstreckeneinsatz geplanten Reifen jedoch unregelmäßige Abriebseffekte noch begünstigen. Bei schmalen Umfangsrillen ist eine derartige Struktur mit über die gesamte Tiefe der Umfangsrille ausgebildeten Verwindungen der Umfangsrille darüber hinaus schwer herstellbar.

Somit liegt der Erfindung die Aufgabe zugrunde, derartige Fahrzeugluftreifen, insbesondere Nutzfahrzeugreifen zu ermöglichen, welche sowohl einen guten Schutz des Rillengrundes vor Eindringen von Steinen bei guten Nassgriffeigenschaften über die Lebensdauer ermöglichen und auch bei schmalen Umfangsrillen wirksam einsetzbar und einfach herstellbar sind.

Die Aufgabe wird erfindungsgemäß durch die Ausbildung eines Fahrzeugluftreifens - insbesondere Nutzfahrzeugreifens - mit einem Laufstreifenprofil mit Profilbändern, welche durch Umfangsrillen voneinander getrennt sind, wobei die Umfangsrillen jeweils in radialer Richtung R nach innen hin von einem Rillengrund und beiderseits des Rillengrundes durch eine Rillenwand begrenzt wird, wobei die beiden durch die Umfangsrille getrennten Profilbänder in radialer Richtung R nach außen hin durch eine die Straßenkontaktfläche bildende radial äußere Oberfläche und in axialer Richtung A zur Umfangsrille hin jeweils durch eine Flanke begrenzt wird, welche sich in radialer Richtung R vom Rillengrund bis zur radial äußeren Oberfläche erstreckt und eine Rillenwand der Umfangsrille bildet, wobei im Rillengrund zumindest einer Umfangsrille in Umfangsrichtung U hintereinander angeordnete erste Gummiblöcke und in Umfangsrichtung U hintereinander angeordnete zweite Gummiblöcke ausgebildet sind, wobei die ersten Gummiblöcke in der Flanke des ersten Profilblockbandes und die zweiten Gummiblöcke in der Flanke des zweiten Probfilblockbandes angebunden sind, gemäß den Merkmalen von Anspruch 1 gelöst, bei dem die ersten und zweiten Gummiblöcke mit einer vom Rillengrund in radialer Richtung R nach außen gemessenen Höhe h mit (1/8)P_{T}≤h≤(1/3)P_{T} ausgebildet sind, wobei P_{T} die in der Umfangsrille gemessene Profiltiefe ist, bei dem die ersten und zweiten Gummiblöcke in alternierender Abfolge in Umfangsrichtung U hintereinander angeordnet sind, wobei ein erster Gummiblock jeweils in axialer Richtung A bis in eine Position im axialen Erstreckungsbereich von zwei hintereinander angeordneten zweiten Gummiblöcken erstreckt ist und mit Abstand zur Flanke des zweiten Profilbandes endet, und wobei ein zweiter Gummiblock jeweils in axialer Richtung A bis in eine Position im axialen Erstreckungsbereich von zwei hintereinander angeordneten ersten Gummiblöcken erstreckt ist und mit Abstand zur Flanke des ersten Profilbandes endet.

Durch diese Ausbildung wird mithilfe der Gummiklötze ein guter Schutz gegen Eindringen von Steinen im unteren Bereich der Umfangsrille ermöglicht, wobei der radial äußere Erstreckungsbereich der Umfangsrille radial außerhalb der Gummiblöcke weiterhin für gute Nässeeigenschaften, gute unregelmäßige Abriebeigenschaften und lange Lebensdauer optimiert werden können. Im radial inneren Erstreckungsabschnitt im Bereich des Rillengrundes ist durch die in axialer Richtung bewirkte Überschneidung der Positionierung der alternativ hintereinander angeordneten ersten und zweiten Gummiblöcke eine lange wirksame wellenförmige Aufhahmerille zur Aufnahme und Weiterleitung von Wasser gebildet bei langen wirksamen Nassgriffkanten. Die Ausbildung ist auch bei schmalen Umfangsrillen wirksam und durch die einfache Ausbildung der nur rillengrundnahen Blöcke auch einfach herstellbar.

Besonders vorteilhaft ist die Ausbildung eines Fahrzeugreifens gemäß den Merkmalen von Anspruch 2, wobei die erste und die zweite Flanke zumindest längs ihrer radialen Erstreckung in ihrem radial äußeren Erstreckungsabschnitt, welcher sich zwischen radial äußerer Oberfläche und den in der Flanke angebundenen Gummiblöcken erstreckt, geradlinig in Umfangsrichtung erstreckt ausgebildet sind. Hierdurch kann eine weitere Optimierung des Rollwiderstands ermöglicht und die Geleichmäßigkeit des Abriebs des Reifens weiter verbessert werden.

Besonders vorteilhaft ist die Ausbildung eines Fahrzeugreifens gemäß den Merkmalen von Anspruch 3, wobei die Gummiblöcke in radialer Richtung R nach außen hin von einer ebenen Oberfläche und zur Umfangsille hin von Blockflanken begrenzt werden, welche sich in radialer Richtung R vom Rillengrund bis zur ebenen Oberfläche erstrecken. Hierdurch werden in einfacher Weise an den Gummiblöcken zwischen den Blockflanken und der ebenen Oberfläche zusätzliche Nassgriffkanten ermöglicht, die über den Abrieb mit zunehmender Lebensdauer zur Wirkung kommen.

Besonders vorteilhaft ist die Ausbildung eines Fahrzeugreifens gemäß den Merkmalen von Anspruch 4, wobei die Schnittkontur der Blockflanken mit der ebenen Oberfläche mit polygonalem Verlauf ausgebildet ist, wobei die Schnittkontur auf der von der Flanke des Profilbandes, an welcher der Gummiblock angebunden ist, in axialer Richtung wegweisenden Seite einen geradlinigen in Umfangsrichtung U des Reifens erstreckten Abschnitt aufweist. Dies ermöglicht eine weitere Optimierung des Wasserflusses durch die in der Umfangsrille.

Besonders vorteilhaft ist die Ausbildung eines Fahrzeugreifens gemäß den Merkmalen von Anspruch 5, wobei die Schnittkontur in Umfangsrichtung U vor und hinter dem geradlinig in Umfangsrichtung U des Reifens erstreckten Abschnitt jeweils einen geradlinigen schräg zur Flanke des Profilbandes, an welcher der Gummiblock angebunden ist, gerichteten Abschnitt aufweist. Dies begünstigt eine hohe Haltbarkeit der Gummiblöcke.

Besonders vorteilhaft ist die Ausbildung eines Fahrzeugreifens gemäß den Merkmalen von Anspruch 6, wobei die Schnittkontur ausgehend von der Flanke des Profilbandes, an welcher der Gummiblock angebunden ist, jeweils einen geradlinigen in axialer Richtung erstreckten Abschnitt aufweist. Hierdurch werden in einfacher Weise an den Gummiblöcken besonders wirksame Nassgriffkanten ermöglicht, die über den Abrieb mit zunehmender Lebensdauer zur Wirkung kommen.

Besonders vorteilhaft ist die Ausbildung eines Fahrzeugreifens gemäß den Merkmalen von Anspruch 7, wobei die Schnittkontur der Blockflanken mit der ebenen Oberfläche mit abgerundetem - insbesondere mit kreissegmentförmigem - Verlauf ausgebildet ist. Hierdurch kann ein guter Wasserfluss mit hoher Profilhaltbarkeit optimiert umgesetzt werden.

Besonders vorteilhaft ist die Ausbildung eines Fahrzeugreifens gemäß den Merkmalen von Anspruch 8, wobei die ebene Oberfläche in den die Reifenachse aufweisenden Schnittebenen jeweils eine geradlinige Schnittkontur aufweist, welche unter Einschluss eines Neigungswinkels α zur axialen Richtung A mit 0°≤α≤45° von der Flanke des Profilbandes, an welcher der Gummiblock angebunden ist, zur Flanke des anderen Profilbandes hin in radialer Richtung R abfällt. Die Ausbildung mit 0°≤α≤45° ermöglicht eine Kantenlänge in der Rille, welche über den Abrieb bzw. mit zunehmender Lebensdauer des Reifens erhöht wird, wodurch die Nassgriffeigenschaften des Reifens mit zunehmendem Abrieb über die Lebensdauer verbessert werden. Dabei kann die Zunahme der Kantenlänge und somit der Nassgriffeigenschaften durch Wahl des Winkels entsprechend den Erfordernissen des Reifens individuell wirksam eingestellt werden. Dies ermöglicht zusätzliche Freiheitsgrade in der Reifenkonstruktion. Die Ausbildung mit α=0° ermöglicht eine besondere Optimierung des Rollwiderstands.

Besonders vorteilhaft ist die Ausbildung eines Fahrzeugreifens gemäß den Merkmalen von Anspruch 9, wobei die Gummiblöcke kugelsegmentförmig ausgebildet sind. Dies ermöglicht eine weitere Optimierung der Steinauswurfeigenschaften, da durch die Form der Gummiblöcke im Rillengrund keine parallelen, ebenen Flächen ausgebildet sind.

Besonders vorteilhaft zur Optimierung des Rollwiderstandes ist die Ausbildung eines Fahrzeugreifens gemäß den Merkmalen von Anspruch 10, wobei wenigstens eines - insbesondere beide - der die Umfangsrille begrenzenden Profilbänder eine Umfangsrippe ist.

Besonders vorteilhaft zur Optimierung der Traktionseigenschaften ist die Ausbildung eines Fahrzeugreifens gemäß den Merkmalen von Anspruch 11, wobei wenigstens eines - insbesondere beide - der die Umfangsrille begrenzenden Profilbänder eine Profilblockreihe ist.

Die Erfindung wird im Folgenden an Hand der in den Figuren 1 bis 20 dargestellten Ausführungsbeispiele näher erläutert. Hierin zeigen
- Fig.1: einen Umfangsabschnitt eines Nutzfahrzeugluftreifens in Draufsicht,
- Fig.2: eine Umfangsrille des Nutzfahrzeugluftreifens von Fig.1 in vergrößerter Darstellung in Draufsicht,
- Fig.3: die Umfangsrille von Fig.2 in Querschnittsdarstellung gemäß Schnitt III-III von Fig.2,
- Fig.4: die Umfangsrille von Fig.2 in Schnittdarstellung gemäß Schnitt IV-IV von Fig.2,
- Fig.5: die Umfangsrille von Fig.2 in alternativer Ausführung,
- Fig.6: die Umfangsrille von Fig.5 in Querschnittsdarstellung gemäß Schnitt VI-IV von Fig.5,
- Fig.7: die Umfangsrille von Fig.5 in Schnittdarstellung gemäß Schnitt VII-VII,
- Fig. 8: die Umfangsrille von Fig.1 in weiterer alternativer Ausführung,
- Fig.9: die Umfangsrille von Fig.8 in Schnittdarstellung gemäß Schnitt IX-IX von Fig.8,
- Fig.10: die Umfangsrille von Fig.8 in Schnittdarstellung gemäß Schnitt X-X von Fig.8,
- Fig.11: die Umfangsrille von Fig.1 in weiterer alternativer Ausführung,
- Fig.12: die Umfangsrille von Fig.11 in Schnittdarstellung gemäß Schnitt XII-XXII von Fig.11,
- Fig.13: die Umfangsrille von Fig.11 in Schnittdarstellung gemäß Schnitt XIII-XIII von Fig.11,
- Fig.14: einen Umfangsabschnitt eines Nutzfahrzeugluftreifens in alternativer Ausführung mit Profilblockreihen,
- Fig.15: eine zwischen zwei Profilblockreihen ausgebildeten Umfangsrille des Laufstreifenprofils von Fig.14 in vergrößerter Darstellung in Draufsicht,
- Fig.16: die Umfangsrille von Fig.15 in Schnittdarstellung gemäß Schnitt XVI-XVI von Fig.15,
- Fig.17: die Umfangsrille von Fig.15 in Schnittdarstellung gemäß Schnitt XVII-XVII von Fig.15,
- Fig.18: die Umfangsrille von Fig.15 in alternativer Ausführung,
- Fig.19: die Umfangsrille von Fig.18 in Schnittdarstellung gemäß Schnitt XIX-XIX von Fig.18 und
- Fig.20: die Umfangsrille von Fig.18 in Schnittdarstellung gemäß Schnitt XX-XX von Fig.18.

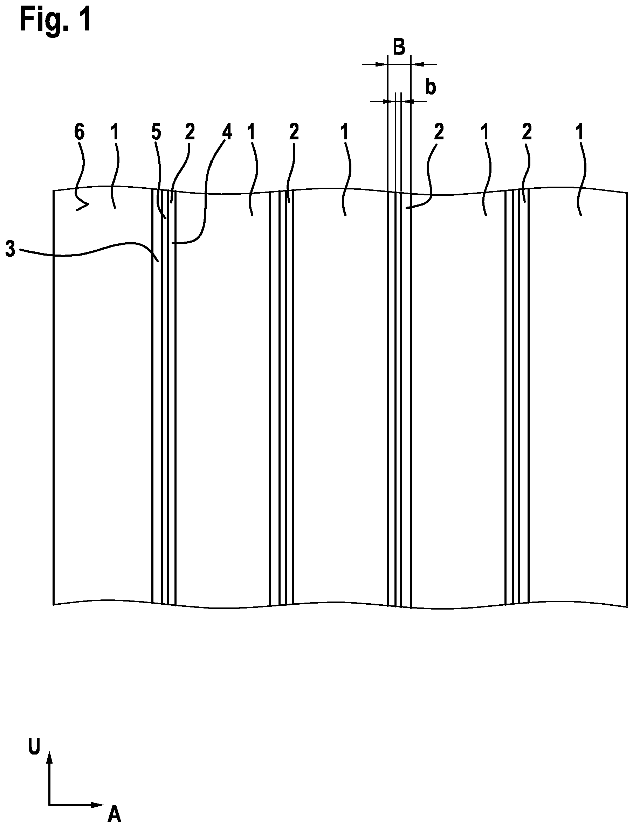

Die Fig.1 bis 4 zeigen ein Laufstreifenprofil eines Nutzfahrzeugluftreifens bekannter Art mit mehreren in axialer Richtung A des Fahrzeugluftreifens nebeneinander angeordneten, über den Umfang des Fahrzeugluftreifens in Umfangsrichtung U erstreckten Umfangsrippen 1. Dabei sind jeweils zwei in axialer Richtung A nebeneinander angeordnete Umfangsrippen 1 in axialer Richtung A durch eine Umfangsrille 2 voneinander getrennt. Die Umfangsrillen 2 erstrecken sich in bekannter Weise in Umfangsrichtung U des Fahrzeugluftreifens über den gesamten Umfang des Fahrzeugluftreifens.

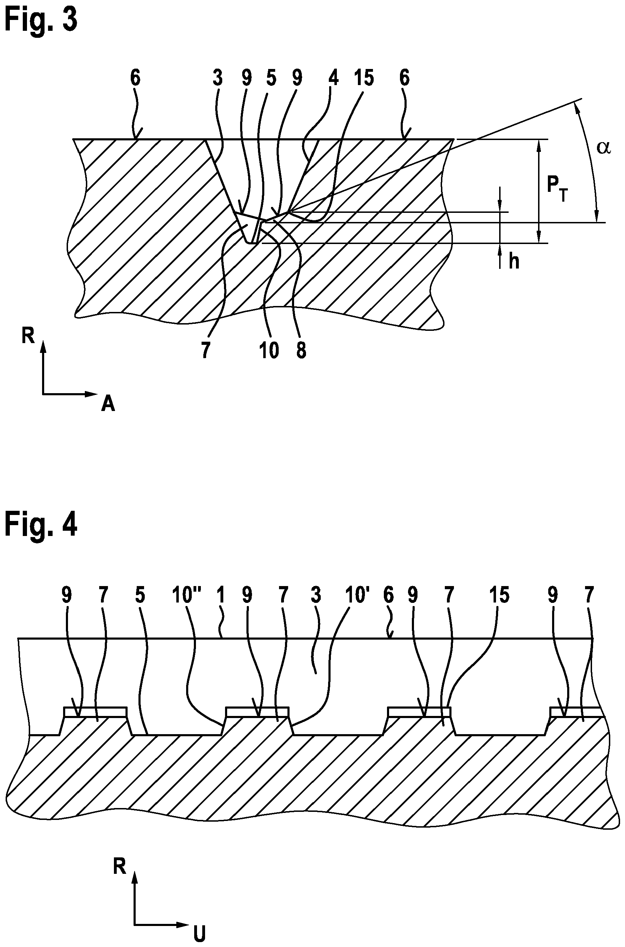

Wie in den Fig. 3 und 4 dargestellt ist, sind die Umfangsrippen 1 in radialer Richtung R des Fahrzeugluftreifens nach außen hin durch eine die Bodenkontaktoberfläche bildende, radial äußere Oberfläche 6 begrenzt. Die Umfangsrillen 2 sind in radialer Richtung R des Fahrzeugluftreifens nach innen hin durch einen über den gesamten Umfang des Fahrzeugluftreifens erstreckten Rillengrund 2 begrenzt.

Die Umfangsrippen 1 werden in axialer Richtung A des Fahrzeugluftreifens jeweils durch eine Flanke 3 bzw. 4 der Umfangsrippe 1 begrenzt, welche jeweils eine Rillenwand der angrenzenden Umfangsrille 2 bildet. Wie in den Fig. 1 bis 3 zu erkennen ist, ist dabei eine Umfangsrille 2 in axialer Richtung A jeweils zur einen Seite hin von einer Flanke 3 der einen, die Umfangsrille 2 begrenzenden Umfangsrippe 1 und zur anderen Seite hin durch eine Flanke 4 der anderen, die Umfangsrille 2 begrenzende Umfangsrippe 1 begrenzt. Dabei ist die Flanke 3 auf der einen axialen Seite neben dem Rillengrund 5 der Umfangsrille 2 und die Flanke 4 auf der anderen Seite neben dem Rillengrund 5 ausgebildet. Die Flanke 3 bildet dabei die eine Rillenwand und die Flanke 4 die andere Rillenwand der Umfangsrille 2. Die Flanken 3 und 4 erstrecken sich dabei jeweils in radialer Richtung R ausgehend vom Rillengrund 2 nach radial außen bis zur radial äußeren Oberfläche 6 der jeweils angrenzenden Umfangsrippe 1.

Die Umfangsrille 2 ist dabei mit einer radialer Richtung R des Fahrzeugluftreifens zwischen der radial äußeren Oberfläche 6 der angrenzenden Umfangrippen 1 und dem tiefsten Punkt des Rillengrundes 2 gemessenen Profiltiefe P_{T} ausgebildet. Die Profiltiefe P_{T} ist dabei mit 6mm ≤ P_{T} ≤ 32 mm, beispielsweise mit P_{T} = 15 mm ausgebildet.

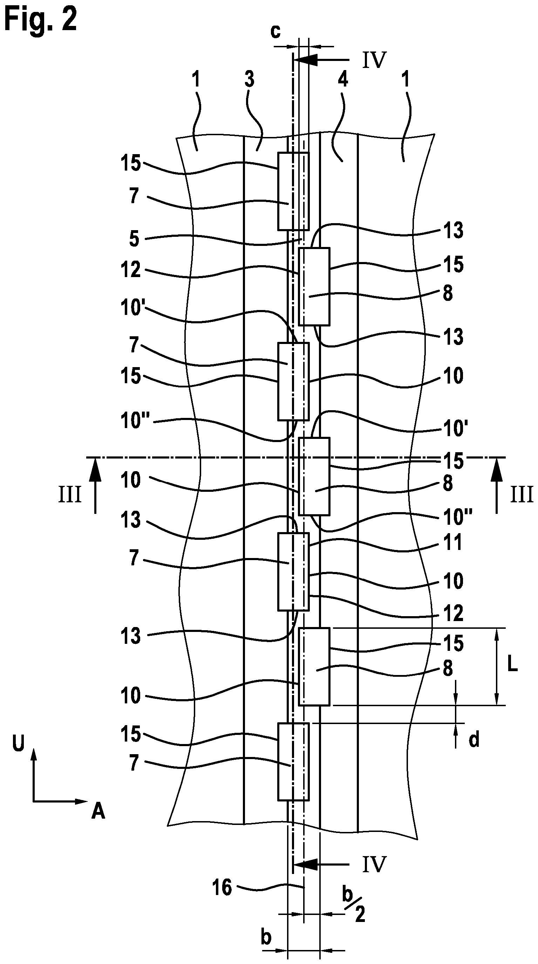

Wie in den Fig.2 bis 4 dargestellt ist, sind im Rillengrund 5 der Umfangsrille 2 in Umfangsrichtung U des Fahrzeugluftreifens hintereinander verteilt angeordnete Gummiblöcke 7 ausgebildet, welche in axialer Richtung A aus der Flanke 3 in Richtung zur Flanke 4 hin erstreckt sind und mit axialem Abstand von der Flanke 4 enden.
Die Gummiblöcke 7 erstrecken sich in Umfangsrichtung U des Fahrzeugluftreifens jeweils über eine Erstreckungslänge L. Ebenso sind im Rillengrund 5 der Umfangsrille 2 in Umfangsrichtung U des Fahrzeugluftreifens hintereinander verteilt angeordnete Gummiblöcke 8 ausgebildet, welche in axialer Richtung A aus der Flanke 4 in Richtung zur Flanke 3 hin erstreckt sind und mit axialem Abstand von der Flanke 3 enden. Die Gummiblöcke 8 erstrecken sich in Umfangsrichtung U des Fahrzeugluftreifens jeweils über eine Erstreckungslänge L.

Dabei sind die Gummiblöcke 3 und 4 sind längs der Erstreckung der Umfangsrille 2 in alternierender Anordnung positioniert, sodass auf jeden Gummiblock 7 ein Gummiblock 8 und auf jeden Gummiblock 8 ein Gummiblock 7 folgt.

Zur einfacheren, übersichtlicheren Darstellung sind die Gummiblöcke 7 und 8 in Fig. 1 nicht eingezeichnet.

Wie in Fig. 1 und 2 zu erkennen ist, ist die Umfangsrille 2 jeweils im Bereich der radial äußeren Oberfläche 6 mit einer in axialer Richtung A gemessenen Breite B ausgebildet und im Rillengrund mit einer Breite b, wobei B > b gewählt ist.

Die Gummiblöcke 7 sind in radialer Richtung R des Fahrzeugluftreifens nach außen hin von einer ebenen Oberfläche 9 und zur Flanke 4 hin durch eine Gummiblockflanke 10 sowie in Umfangsrichtung U des Fahrzeugluftreifens der Flanke 10 vor- und nachgeordnet jeweils durch eine Flanke 10' bzw. eine Flanke 10" begrenzt. Die Flanken 10, 10' und 10" erstrecken sich dabei in radialer Richtung R des Fahrzeugluftreifens aus dem Rillengrund 5 bis zur Oberfläche 9 des Gummiblocks 7 und schneiden diesen in einer Schnittkonturlinie 11. Die Oberfläche 9 des Gummiblocks 7 schneidet die Flanke 3 in einer Schnittkante 15.

In analoger Weise sind die Gummiblöcke 8 in radialer Richtung R des Fahrzeugluftreifens nach außen hin von einer ebenen Oberfläche 9, in axialer Richtung A des Fahrzeugluftreifens in Richtung zur Flanke 3 hin durch eine Blockflanke 10 und in Umfangsrichtung der Flanke 10 vor- und nachgeordnet jeweils durch eine Flanke 10' bzw. 10" begrenzt. Die Flanken 10, 10' und 10" erstrecken sich dabei in radialer Richtung R des Fahrzeugluftreifens aus dem Rillengrund 5 bis zur Oberfläche 9 des Gummiblocks 8 und schneiden diesen in einer Schnittkonturlinie 11. Die Oberfläche 9 des Gummiblocks 8 bildet mit der Flanke 4 eine Schnittkante 15.

Die Schnittkonturlinie 11 der Blöcke 7 ist in ihren zur Flanke 4 weisenden Erstreckungsabschnitt mit einem mittleren, gradlinig in Umfangsrichtung U erstreckten Abschnitt 12 und in Umfangsrichtung diesem Abschnitt 12 vor- und nachgeordnet jeweils mit einem in axialer Richtung A gradlinig ausgerichteten Erstreckungsabschnitt 13 ausgebildet. Der Erstreckungsabschnitt 13 schneidet den Erstreckungsabschnitt 12, sowie die Flanke 3 in der Schnittkante 15.

In analoger Weise ist die Schnittkonturlinie 11 der Blöcke 8 in ihrem zur Flanke 3 hingerichteten Erstreckungsabschnitt mit einem mittleren, gradlinig in Umfangsrichtung U erstreckten Erstreckungsabschnitt 12 und in Umfangsrichtung diesem Abschnitt 12 vorund nachgeordnet jeweils mit einem in axialer Richtung A gradlinig ausgerichteten Erstreckungsabschnitt 13 ausgebildet. Der Erstreckungsabschnitt 13 schneidet dabei jeweils den mittleren Erstreckungsabschnitt 12 und die Flanke 4 in der Schnittkante 15.

Wie in Fig.2 dargestellt ist, sind die Gummiblöcke 7 und 8 im Bereich ihrer Oberfläche 9 in Umfangsrichtung U mit einer maximalen Erstreckungsläge L ausgebildet. In Umfangsrichtung U des Fahrzeugluftreifens ist jeweils zwischen einem Gummiblock 8 und einem benachbarten Gummiblock 7 ein in Umfangsrichtung U gemessener Abstand d ausgebildet, mit (b/2) <d < 10b. Die Erstreckungslänge L der Blöcke ist mit b < L< (10 b) ausgebildet. Wie in Fig.2 zu erkennen ist, erstrecken sich die Gummiblöcke 7 mit ihrer Oberfläche 9 ausgehend von der Flanke 3 in axialer Richtung A in Richtung zur Flanke 4 hin über die axiale Position der Breitenmitte der Umfangsrille 2 im Rillengrund 5 im Abstand (b/2) von der Flanke 3 hinaus. Ebenso erstrecken sich die Gummiblöcke 8 mit ihrer Oberfläche 9 ausgehend von der Flanke 4 in axialer Richtung A in Richtung zur Flanke 3 hin über die axiale Position der Breitenmitte der Umfangsrille 2 im Rillengrund 5 im Abstand (b/2) von der Flanke 4 hinaus.

Die Gummiblöcke 7 erstrecken sich dabei mit ihren Oberflächen 9 unter axialer Überschneidung mit der Oberfläche 9 der Gummiblöcke 8 mit in axialer Richtung gemessener Überschneidungslänge c mit 0mm < c < (b/2).

Wie in den Fig. 3 und 4 zu erkennen ist, erstrecken sich die Gummiblöcke 7 bzw. 8 jeweils ausgehend vom Rillengrund 9 in radialer Richtung R bis in eine Höhe h mit (1/8)P_{T} < h < (1/3)P_{T} - beispielsweise bis in eine Höhe h = (¼)P_{T} - und enden dort. Die Schnittkante 15 der Oberfläche 9 ist dabei jeweils in der Höhe h positioniert.

Die Fig. 2 bis 4 zeigen dabei - wie beschrieben - einen polygonal ausgebildeten Verlauf der Schnittkonturlinie 11. Im dargestellten Ausführungsbeispiel bildet die Schnittkonturlinie 11 einen Verlauf mit zwei Knickstellen bzw. Ecken.

Wie in den Fig.2 und 4 dargestellt ist, ist die Oberfläche 9 der Gummiblöcke 7 und 8 ausgehend von der Schnittkante 15 in axialer Richtung A zur Blockflanke 10 hin unter Einschluss eines Neigungswinkels α geneigt ausgebildet, wobei ausgehend von der Schnittkante 15 zur Flanke 10 hin die Oberfläche 9 in den Schnittebenen, welche die Reifenachse beinhaltet, die Oberfläche 9 abfällt.

Der Neigungswinkel α ist dabei mit 0°< α ≤ 45° ausgebildet.

Beispielsweise ist der Neigungswinkeln α mit α = 5° ausgebildet.

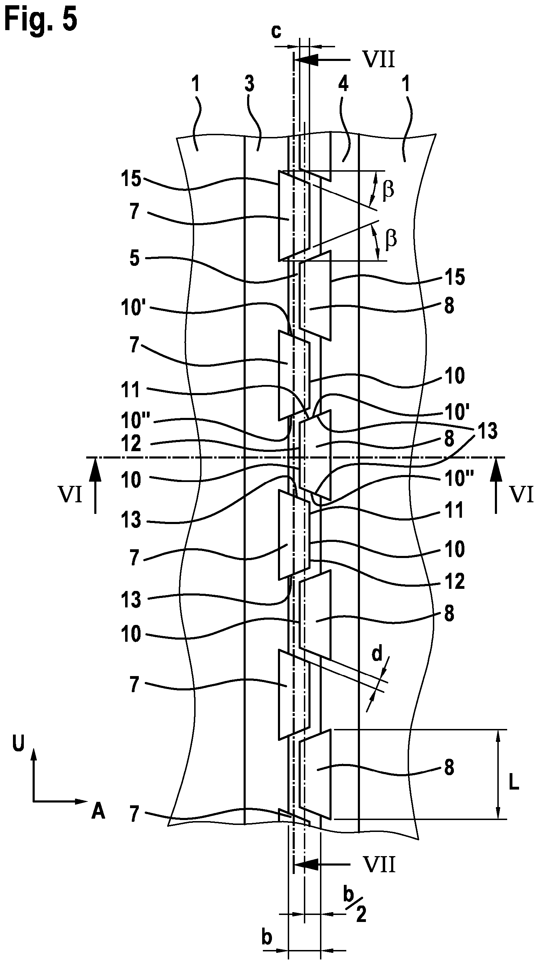

Fig. 5 bis 7 zeigen ein weiteres alternatives Ausführungsbeispiel der in den Fig. 2 bis 4 dargestellten Umfangsrille 2. Bei diesem Ausführungsbeispiel sind bei den Gummiblöcken 7 und bei den Gummiblöcken 8 jeweils die Abschnitte 13 der Schnittkonturlinien 11 unter Einschluss eines Neigungswinkels β zur axialen Richtung A des Fahrzeugluftreifens ausgerichtet, wobei die Neigungsorientierung ausgehend von der Schnittkante 15 jeweils längs der axialen Erstreckung der beiden Abschnitte 13 einer Oberfläche 9 zum mittleren Abschnitt 12 hin entgegengesetzt gewählt ist. Die beiden eine Oberfläche 9 begrenzenden Abschnitte 13 laufen somit ausgehend von der Schnittkante 15 zum mittleren Abschnitt und somit in Richtung der gegenüberliegenden Rippenflanke v-förmig aufeinander zu. Wie in Fig.5 zu erkennen ist, ist die Erstreckungslänge L des jeweiligen Gummiblockes 7 bzw. 8 in der Oberfläche 9 in der Schnittkante 15 ausgebildet.

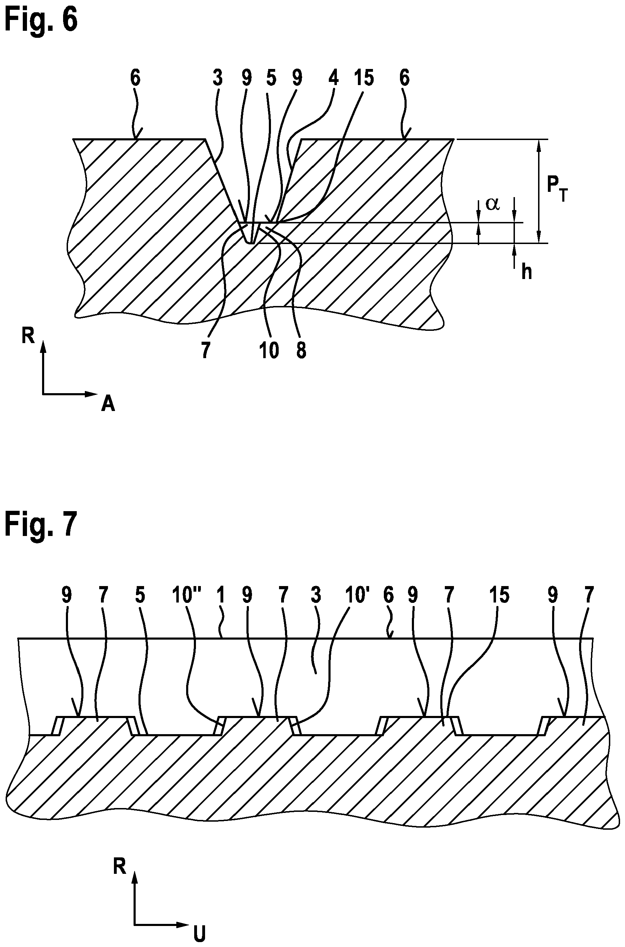

In Fig.6 ist ein weiteres Ausführungsbeispiel der die Gummiblöcke 7 und 8 begrenzenden Oberfläche 9 am Beispiel eines Gummiblockes 8 dargestellt, bei welchem der Neigungswinkel α mit α = 0 gewählt ist.

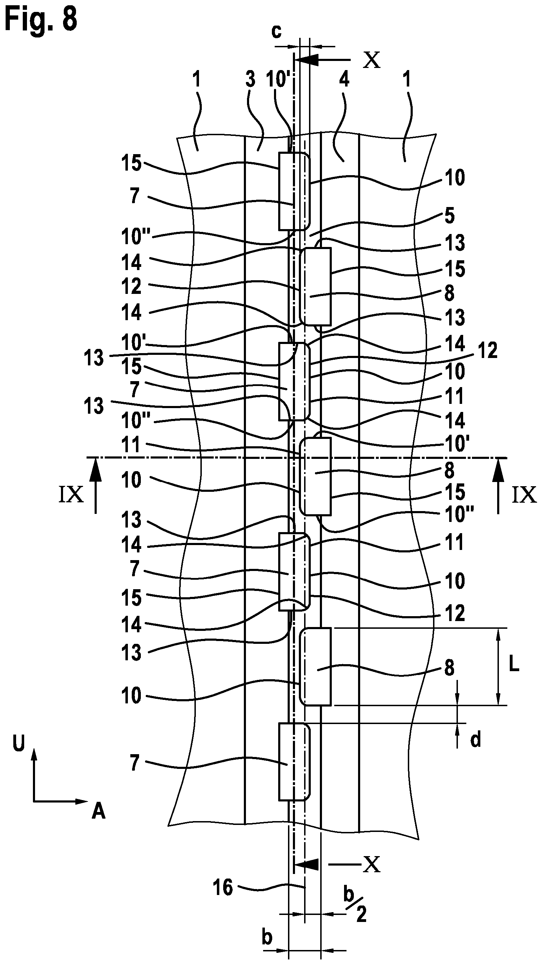

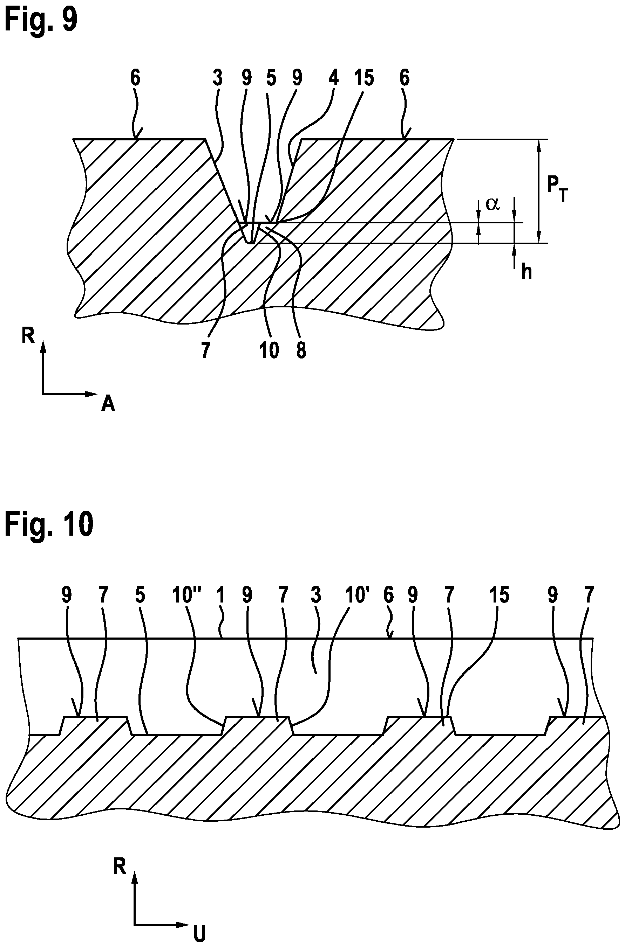

In den Fig. 8 bis 10 ist ein weiteres Ausführungsbeispiel einer Umfangsrille 2 mit Gummiblöcken 7 und 8 dargestellt, welche wie in den Ausführungsbeispielen der Fig.2 bis 4 ausgebildet sind. Wie in Fig. 8 zu erkennen ist, ist dabei zwischen dem gradlinig in Umfangsrichtung U erstreckten Abschnitt 12 und den in Umfangsrichtung U diesem vorund nachgeordnet gradlinig erstreckten Abschnitten 13 einer Oberfläche 9 jeweils ein kreissegmentförmig abgerundeter Übergangsabschnitt 14 ausgebildet.

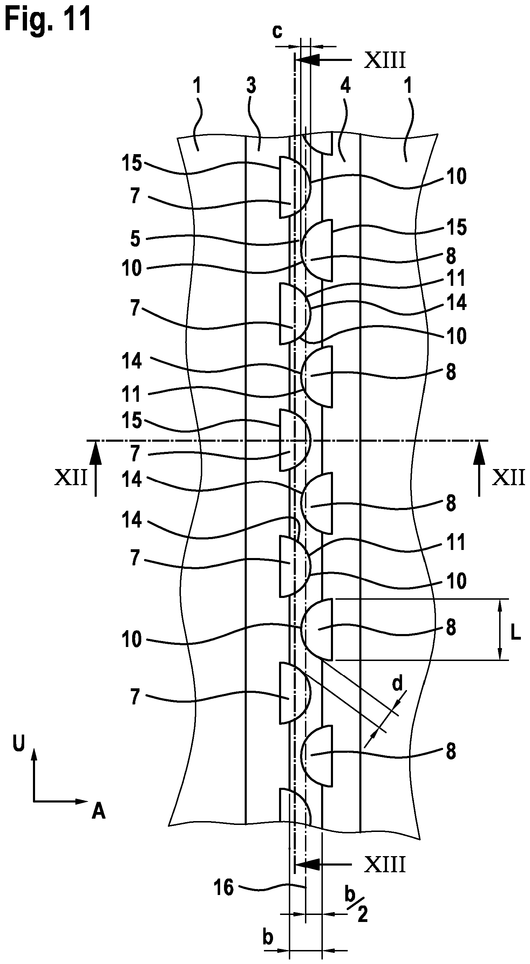

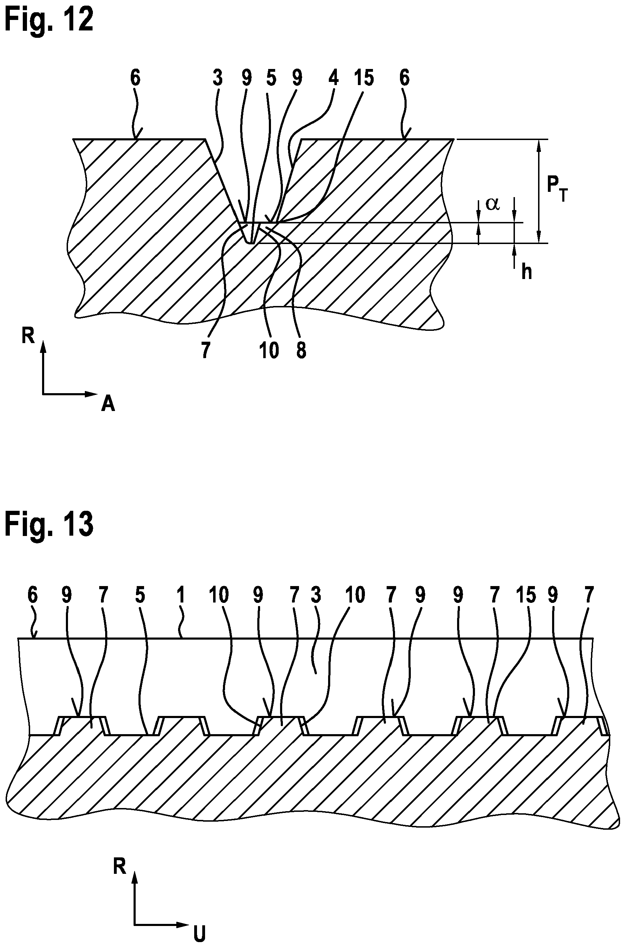

Die Fig.11 bis 13 zeigen ein weiteres Ausführungsbeispiel einer mit Gummiblöcken 7 und 8 ausgebildeten Umfangsrille 2, bei der die Umfangsrille 2 analog zur Ausbildung der Umfangsrille 2 der Figuren 2 bis 4 ausgebildet ist, wobei die Schnittkonturlinie 11 jedoch eine kreissegmentförmige Konturlinie bildet. Im dargestellten Ausführungsbeispiel bildet die kreissegmentförmige Konturlinie 11 einen Halbkreis um einen Mittelpunkt, welche auf der Schnittkante 15 der zugehörigen Oberfläche 9 liegt. Bei dieser Ausführung wird der jeweilige Gummiblock 7 bzw. 8 auch lediglich durch eine zylindersegmentförmige oder kegelstumpfsegmentförmige Flanke 10 begrenzt.

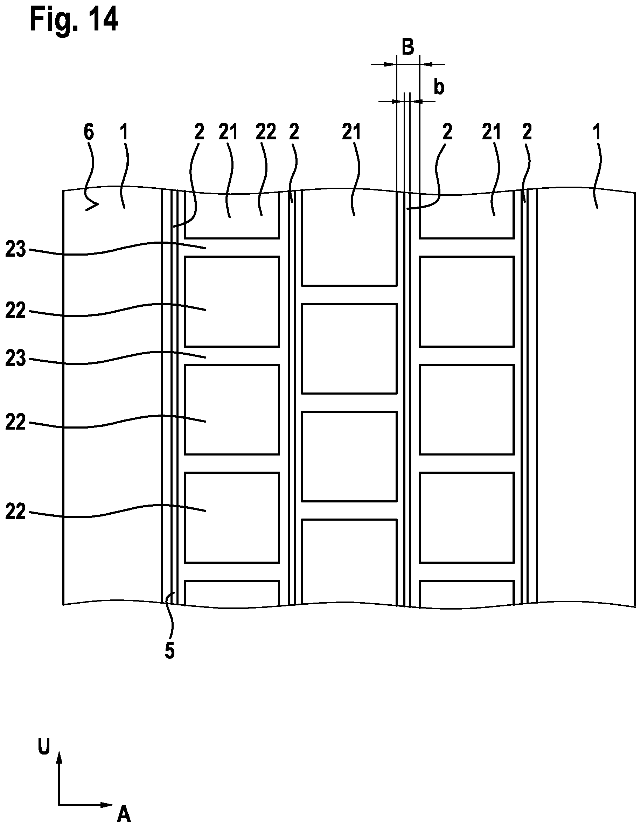

Die Fig.14 bis 17 zeigen ein Ausführungsbeispiel eines Nutzfahrzeugluftreifens analog zur Ausbildung der Fig.1 bis 4, bei welchem jedoch - wie in Fig.14 zu erkennen ist - sowohl Umfangsrippen 1 als auch Profilblockreihen 21 bekannter Art ausgebildet sind. Wie in Fig.14 zu erkennen ist, ist dabei in den beiden Reifenschultern des Laufstreifenprofils jeweils eine Umfangsrippe 1 bekannter Art ausgebildet. Zwischen diesen beiden Umfangsrippen 1 sind mehrere, axial nebeneinander angeordnete Profilblockreihen 21 ausgebildet. Benachbart nebeneinander angeordnete Profilblockreihen 21 sind ebenso wie die Umfangsrippe 1 von der zu benachbarten Profilblockreihe 21 jeweils von einer Umfangsrille 2 getrennt. Die Umfangsrille 2 ist, wie im Zusammenhang mit Fig.1 beschrieben, ausgebildet. Die Profilblockreihe 21 ist in bekannter Weise über den gesamten Umfang des Fahrzeugluftreifens erstreckt und aus in Umfangsrichtung U hintereinander angeordneten und jeweils durch Querrillen 23 voneinander getrennten Profilblockelementen 22 ausgebildet. Die Profilblockelemente 22 sind in bekannter Weise in radialer Richtung R nach außen hin durch eine die Straßenkontaktoberfläche bildende radial äußere Oberfläche 6 begrenzt.

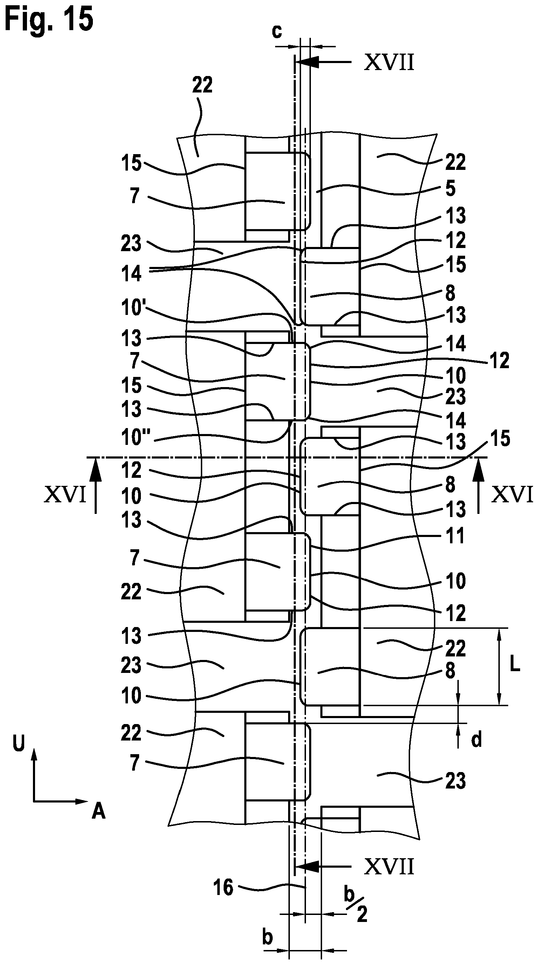

Wie in Fig.15 bis 17 dargestellt ist, sind auch bei dieser Ausführung in den zwischen zwei benachbarten Profilblockreihen 21 ausgebildeten Umfangsrillen 2, in den die Umfangsrille 2 begrenzenden und die jeweilige Rillenwand bildenden Flanken 3 und 4 Gummiblöcke 7 und 8 - wie im Zusammenhang mit den Fig.1 bis 4 dargestellt und beschrieben - ausgebildet. Wie in Fig. 15 zu erkennen ist, sind die Gummiblöcke 7 jeweils in den durch die Profilblockelemente 22 der einen, die Umfangsrille 2 begrenzenden Profilblockreihe 21 gebildeten Flanke 3 und die Gummiblöcke 8 in den durch die Profilblockelemente 22 der anderen, die Umfangsrille 2 begrenzenden Profilblockreihe 21 gebildeten Flanke 4 angebunden.

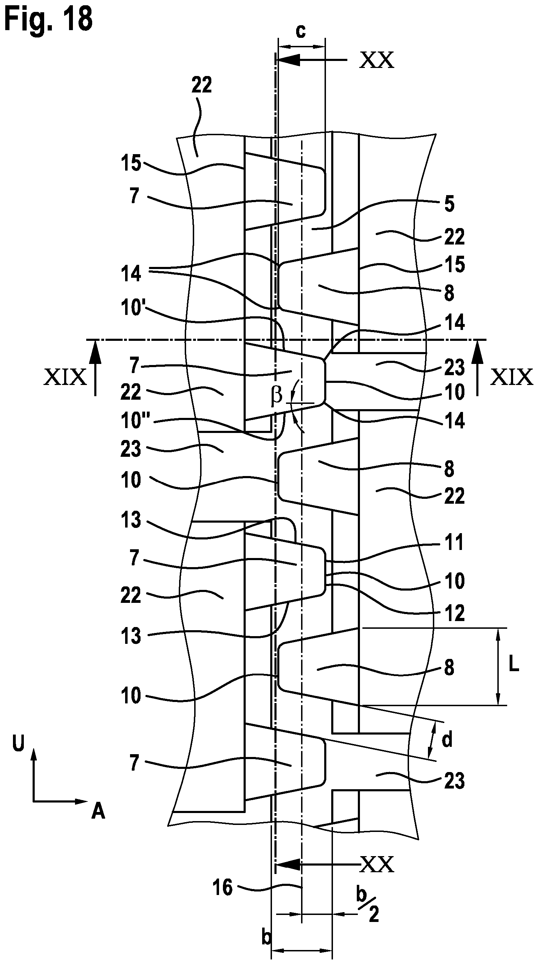

Die Fig. 18 bis 20 zeigen eine alternative Ausbildung der in den Fig. 15 bis 17 dargestellten Umfangsrille 2, bei der die Oberflächen 9 und die Abschnitte 12 und 13 analog zur Ausbildung der Fig.5 bis 7 ausgebildet sind.

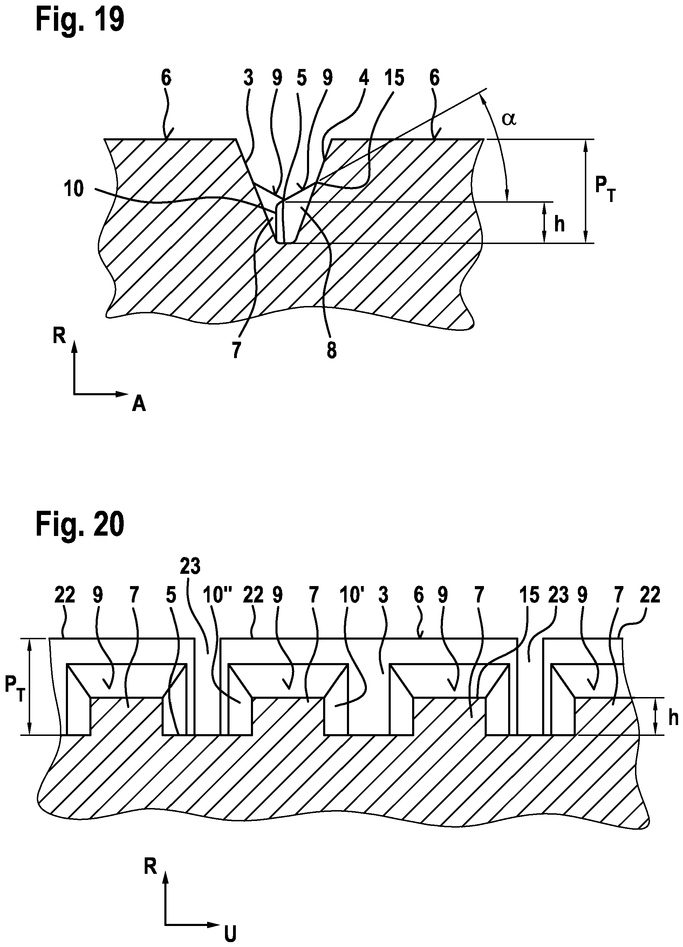

Wie in den Fig.18 bis 20 beispielhaft dargestellt ist, sind die Oberflächen 9 auch bei Ausbildungen zwischen Profilblockreihen 21 unter Einschluss eines Neigungswinkels α - wie in Fig.19 zu erkennen ist - ausgebildet, welcher mit 0° < α < 45° ausgebildet ist.

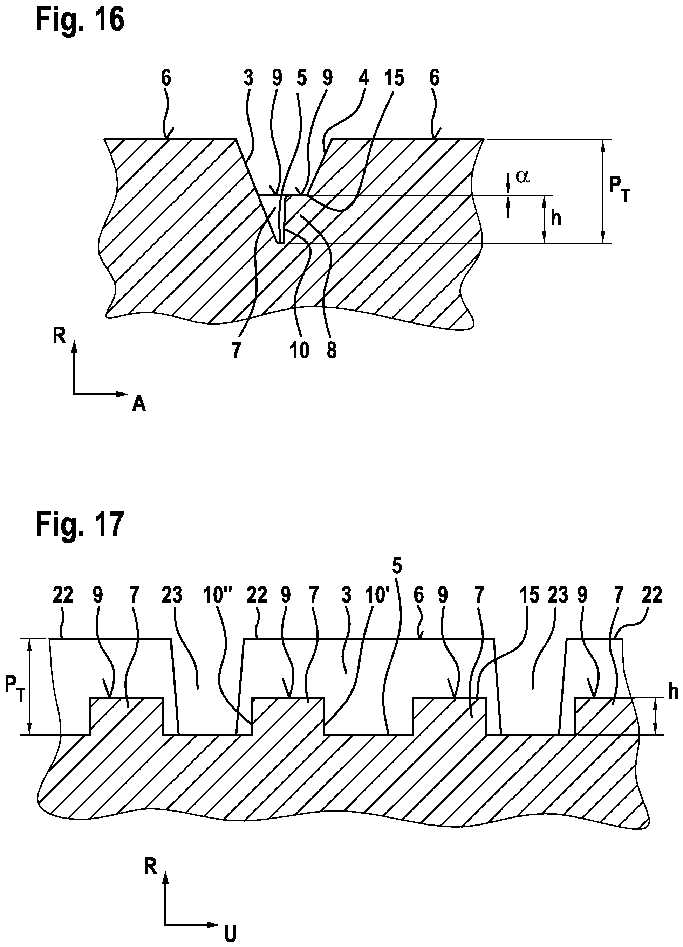

Dabei ist in Fig. 19 beispielsweise eine Ausführung mit α = 5° und in Fig. 17 eine Ausbildung mit α = 0° dargestellt.

Die Ausbildung der Gummiblöcke 7 und 8 sind zwar in den Fig.14 bis 20 nur an einigen wenigen Ausführungsbeispielen dargestellt und beschrieben, allerdings sind in weiteren alternativen Ausführungen auch die anderen in den Fig.1 bis 13 dargestellten und beschriebenen Ausführungsbeispiele auch in Umfangsrillen 2 zwischen Profilblockreihen 21 ausgebildet.

Ebenso sind alle oben genannten Ausführungen der Umfangsrillen 2 mit Gummiblöcken 7 und 8 auch in den Umfangsrillen 2, welche zwischen einer Umfangsrippe 1 und der benachbarten Profilblockreihe 21 ausgebildet ist, analog ausgebildet.

Die Gummiblöcke 7 und 8 sind in weiterer, nicht dargestellter Ausführung kugelsegmentförmig ausgebildet, wobei die Kugelsegmente Segmente einer Kugel darstellen, die den Rillengrund 2 und die jeweils zugehörige Flanke 3 bzw. 4 schneiden und die andere, gegenüberliegende Flanke 4 bzw.3 dann nicht berühren.

### Bezugszeichenliste

- 1: Umfangsrippe
- 2: Umfangsrille
- 3: Flanke
- 4: Flanke
- 5: Rillengund
- 6: Radial äußere Oberfläche
- 7: Gummiblock
- 8: Gummiblock
- 9: Oberfläche
- 10: Blockflanke
- 11: Schnittkonturlinie
- 12: Abschnitt
- 13: Abschnitt
- 14: Abschnitt
- 15: Schnittkante
- 21: Profilblockreihe
- 22: Profilblockelement
- 23: Querrille

## Patentansprüche

1. Fahrzeugluftreifen - insbesondere Nutzfahrzeugreifen - mit einem Laufstreifenprofil mit Profilbändern (1,21), welche durch Umfangsrillen (2) voneinander getrennt sind, wobei die Umfangsrillen (2) jeweils in radialer Richtung R nach innen hin von einem Rillengrund (5) und beiderseits des Rillengrundes (5) durch eine Rillenwand begrenzt werden, wobei die beiden durch die Umfangsrille (2) getrennten Profilbänder (1,21) in radialer Richtung R nach außen hin durch eine die Straßenkontaktfläche bildende radial äußere Oberfläche (6) und in axialer Richtung A zur Umfangsrille (2) hin jeweils durch eine Flanke (3,4) begrenzt werden, welche sich jeweils in radialer Richtung R vom Rillengrund (5) bis zur radial äußeren Oberfläche (6) erstreckt und eine Rillenwand der Umfangsrille (2) bildet, wobei im Rillengrund (5) zumindest einer Umfangsrille (2) in Umfangsrichtung U hintereinander angeordnete erste Gummiblöcke (7) und in Umfangsrichtung U hintereinander angeordnete zweite Gummiblöcke (8) ausgebildet sind, wobei die ersten Gummiblöcke (7) in der Flanke (3) des ersten Profilblockbandes (1) und die zweiten Gummiblöcke (8) in der Flanke (4) des zweiten Probfilblockbandes (1) angebunden sind,
**dadurch gekennzeichnet,**
**dass** die ersten (7) und zweiten (8) Gummiblöcke mit einer vom Rillengrund (5) in radialer Richtung R nach außen gemessenen Höhe h mit (1/8)P_{T}≤h ≤ (1/3)P_{T} ausgebildet sind, wobei P_{T} die in der Umfangsrille (2) gemessene Profiltiefe ist, dass die ersten (7) und zweiten (8) Gummiblöcke in alternierender Abfolge in Umfangsrichtung U hintereinander angeordnet sind, wobei ein erster Gummiblock (7) jeweils in axialer Richtung A bis in eine Position im axialen Erstreckungsbereich von zwei hintereinander angeordneten zweiten Gummiblöcken (8) erstreckt ist und mit Abstand zur Flanke (4) des zweiten Profilbandes (1) endet, wobei ein zweiter Gummiblock (8) jeweils in axialer Richtung A bis in eine Position im axialen Erstreckungsbereich von zwei hintereinander angeordneten ersten Gummiblöcken (7) erstreckt ist und mit Abstand zur Flanke (3) des ersten Profilbandes (1) endet.

2. Fahrzeugluftreifen gemäß den Merkmalen von Anspruch 1,
wobei die erste (3) und die zweite (4) Flanke zumindest längs ihrer radialen Erstreckung in ihrem radial äußeren Erstreckungsabschnitt, welcher sich zwischen radial äußerer Oberfläche (6) und den in der Flanke (3,4) angebundenen Gummiblöcken (7,8) erstreckt, geradlinig in Umfangsrichtung erstreckt ausgebildet sind.

3. Fahrzeugluftreifen gemäß den Merkmalen von Anspruch 1 oder 2,
wobei die Gummiblöcke (7,8) in radialer Richtung R nach außen hin von einer ebenen Oberfläche (9) und zur Umfangsille (2) hin von Blockflanken (10,10',10") begrenzt werden, welche sich in radialer Richtung R vom Rillengrund (5) bis zur ebenen Oberfläche (9) erstrecken.

4. Fahrzeugluftreifen gemäß den Merkmalen von Anspruch 3,
wobei die Schnittkontur (11) der Blockflanken (10,10',10") mit der ebenen Oberfläche (9) mit polygonalem Verlauf ausgebildet ist, wobei die Schnittkontur (11) auf der von der Flanke (3,4) des Profilbandes (1), an welcher der Gummiblock (7,8) angebunden ist, in axialer Richtung A wegweisenden Seite einen geradlinigen in Umfangsrichtung U des Reifens erstreckten Abschnitt (12) aufweist.

5. Fahrzeugluftreifen gemäß den Merkmalen von Anspruch 4,
wobei die Schnittkontur (11) in Umfangsrichtung U vor und hinter dem geradlinig in Umfangsrichtung U des Reifens erstreckten Abschnitt (12) jeweils einen geradlinigen schräg zur Flanke (3,4) des Profilbandes (1), an welcher der Gummiblock (7,8) angebunden ist, gerichteten Abschnitt (13) aufweist.

6. Fahrzeugluftreifen gemäß den Merkmalen von Anspruch 4 oder 5,
wobei die Schnittkontur (11) ausgehend von der Flanke (3,4) des Profilbandes (1), an welcher der Gummiblock (7,8) angebunden ist, jeweils einen geradlinigen in axialer Richtung erstreckten Abschnitt (13) aufweist.

7. Fahrzeugluftreifen gemäß den Merkmalen von Anspruch 3,
wobei die Schnittkontur (11) der Blockflanken (10,10',10") mit der ebenen Oberfläche (9) mit abgerundetem - insbesondere mit kreissegmentförmigem-Verlauf (14) ausgebildet ist.

8. Fahrzeugluftreifen gemäß den Merkmalen von einen oder mehreren der Ansprüche 3 bis 7,
wobei die ebene Oberfläche (9) in den die Reifenachse aufweisenden Schnittebenen jeweils eine geradlinige Schnittkontur aufweist, welche unter Einschluss eines Neigungswinkels α zur axialen Richtung A mit 0°≤α≤45° von der Flanke (3,4) des Profilbandes (1), an welcher der Gummiblock (7,8) angebunden ist, zur Flanke des anderen Profilbandes (1) hin in radialer Richtung R abfällt.

9. Fahrzeugluftreifen gemäß den Merkmalen von Anspruch 1 oder 2,
wobei die Gummiblöcke (7,8) kugelsegmentförmig ausgebildet sind.

10. Fahrzeugluftreifen gemäß den Merkmalen von einem oder mehreren der vorangegangenen Ansprüche,
wobei wenigstens eines - insbesondere beide - der die Umfangsrille (2) begrenzenden Profilbänder (1) eine Umfangsrippe (1) ist.

11. Fahrzeugluftreifen gemäß den Merkmalen von einem oder mehreren der vorangegangenen Ansprüche,
wobei wenigstens eines - insbesondere beide - der die Umfangsrille (2) begrenzenden Profilbänder eine Profilblockreihe (21) ist.

## Claims

1. Pneumatic vehicle tire - in particular utility vehicle tire - having a tread profile with profile bands (1, 21) which are separated from one another by circumferential channels (2), wherein the circumferential channels (2) are each delimited inward in a radial direction R by a channel base (5) and to both sides of the channel base (5) by a channel wall, wherein the two profile bands (1, 21) separated by the circumferential channel (2) are delimited outward in the radial direction R by a radially outer surface (6), which forms the road contact surface, and in an axial direction A toward the circumferential channel (2) in each case by a flank (3, 4), which extends in each case in the radial direction R from the channel base (5) to the radially outer surface (6) and which forms a channel wall of the circumferential channel (2), wherein, in the channel base (5) of at least one circumferential channel (2), there are formed first rubber blocks (7) arranged one behind the other in the circumferential direction U and second rubber blocks (8) arranged one behind the other in the circumferential direction U, wherein the first rubber blocks (7) are attached in the flank (3) of the first profile block band (1) and the second rubber blocks (8) are attached in the flank (4) of the second profile block band (1),
**characterized**
**in that** the first (7) and second (8) rubber blocks are formed with a height h, measured outward in the radial direction R from the channel base (5), of (1/8) P_{T}≤ h ≤ (1/3)P_{T}, where P_{T} is the profile depth measured in the circumferential channel (2),
**in that** the first (7) and second (8) rubber blocks are arranged one behind the other in an alternating sequence in the circumferential direction U, wherein a first rubber block (7) extends in each case in the axial direction A as far as a position in the axial extent region of two second rubber blocks (8) arranged one behind the other and ends with a spacing to the flank (4) of the second profile band (1), wherein a second rubber block (8) extends in each case in the axial direction A as far as a position in the axial extent region of two first rubber blocks (7) arranged one behind the other and ends with a spacing to the flank (3) of the first profile band (1).

2. Pneumatic vehicle tire as per the features of Claim 1,
wherein the first (3) and the second (4) flank, at least along their radial extent in their radially outer extent portion which extends between radially outer surface (6) and the rubber blocks (7, 8) attached in the flank (3, 4), are formed so as to extend rectilinearly in the circumferential direction.

3. Pneumatic vehicle tire as per the features of Claim 1 or 2,
wherein the rubber blocks (7, 8) are delimited outward in the radial direction R by a planar surface (9) and in the direction of the circumferential channel (2) by block flanks (10, 10', 10") which extend in the radial direction R from the channel base (5) to the planar surface (9).

4. Pneumatic vehicle tire as per the features of Claim 3,
wherein the intersection contour (11) of the block flanks (10, 10', 10") with the planar surface (9) is formed with a polygonal profile, wherein the intersection contour (11) has, on the side pointing in the axial direction A away from that flank (3, 4) of the profile band (1) to which the rubber block (7, 8) is attached, a rectilinear portion (12) extending in the circumferential direction U of the tire.

5. Pneumatic vehicle tire as per the features of Claim 4,
wherein the intersection contour (11) has, in the circumferential direction U in front of and behind the portion (12) extending rectilinearly in the circumferential direction U of the tire, in each case one rectilinear portion (13) which is directed obliquely with respect to that flank (3, 4) of the profile band (1) to which the rubber block (7, 8) is attached.

6. Pneumatic vehicle tire as per the features of Claim 4 or 5,
wherein the intersection contour (11) has in each case a rectilinear portion (13) extending in an axial direction proceeding from that flank (3, 4) of the profile band (1) to which the rubber block (7, 8) is attached.

7. Pneumatic vehicle tire as per the features of Claim 3,
wherein the intersection contour (11) of the block flanks (10, 10', 10") with the planar surface (9) is formed with a rounded - in particular with a circular-segment-shaped - profile (14).

8. Pneumatic vehicle tire as per the features of one or more of Claims 3 to 7,
wherein the the planar surface (9) has, in the section planes that have the tire axis, in each case a rectilinear intersection contour which, enclosing an angle of inclination α with the axial direction A of 0°≤α≤ 45°, slopes downward in the radial direction R from that flank (3, 4) of the profile band (1) to which the rubber block (7, 8) is attached toward the flank of the other profile band (1).

9. Pneumatic vehicle tire as per the features of Claim 1 or 2,
wherein the rubber blocks (7, 8) are of spherical-segment-shaped form.

10. Pneumatic vehicle tire as per the features of one or more of the preceding claims,
wherein at least one - in particular both - of the profile bands (1) that delimit the circumferential channel (2) is a circumferential rib (1).

11. Pneumatic vehicle tire as per the features of one or more of the preceding claims,
wherein at least one - in particular both - of the profile bands that delimit the circumferential channel (2) is a profile block row (21).

## Revendications

1. Pneumatique de véhicule, en particulier pneumatique de véhicule utilitaire, comprenant un profil de bande de roulement avec des bandes profilées (1, 21) qui sont séparées les unes des autres par des rainures périphériques (2), les rainures périphériques (2) étant limitées à chaque fois dans la direction radiale R vers l'intérieur par un fond de rainure (5) et des deux côtés du fond de rainure (5) par une paroi de rainure, les deux bandes profilées (1, 21) séparées par la rainure périphérique (2) étant limitées dans la direction radiale R vers l'extérieur par une surface radialement extérieure (6) formant la surface de contact avec la route et dans la direction axiale A vers la rainure périphérique (2) à chaque fois par un flanc (3, 4) qui s'étend à chaque fois dans la direction radiale R depuis le fond de rainure (5) jusqu'à la surface radialement extérieure (6) et forme une paroi de rainure de la rainure périphérique (2), des premiers blocs en caoutchouc (7) disposés les uns derrière les autres dans la direction périphérique U et des deuxièmes blocs en caoutchouc (8) disposés les uns derrière les autres dans la direction périphérique U étant réalisés dans le fond de rainure (5) d'au moins une rainure périphérique (2), les premiers blocs en caoutchouc (7) étant attachés dans le flanc (3) de la première bande de blocs profilés (1) et les deuxièmes blocs en caoutchouc (8) étant attachés dans le flanc (4) de la deuxième bande de blocs profilés (1),
**caractérisé en ce que**
les premiers (7) et les deuxièmes (8) blocs en caoutchouc sont réalisés avec une hauteur h mesurée vers l'extérieur depuis le fond de rainure (5) dans la direction radiale R telle que (1/8)P_{T} ≤ h ≤ (1/3)P_{T}, P_{T} étant la profondeur de profilé mesurée dans la rainure périphérique (2),
les premiers (7) et les deuxièmes (8) blocs en caoutchouc sont disposés les uns derrière les autres en alternance dans la direction périphérique U, un premier bloc en caoutchouc (7) s'étendant à chaque fois dans la direction axiale A jusque dans une position dans la région d'étendue axiale de deux deuxièmes blocs en caoutchouc (8) disposés l'un derrière l'autre, et se terminant à distance du flanc (4) de la deuxième bande profilée (1),
un deuxième bloc en caoutchouc (8) s'étendant à chaque fois dans la direction axiale A jusque dans une position dans la région d'étendue axiale de deux premiers blocs en caoutchouc (7) disposés l'un derrière l'autre, et se terminant à distance du flanc (3) de la première bande profilée (1).

2. Pneumatique de véhicule selon les caractéristiques de la revendication 1,
dans lequel le premier flanc (3) et le deuxième flanc (4) sont réalisés de manière à s'étendre en ligne droite dans la direction périphérique au moins le long de leur étendue radiale dans leur portion d'étendue radialement extérieure qui s'étend entre la surface radialement extérieure (6) et les blocs en caoutchouc (7, 8) attachés dans le flanc (3, 4).

3. Pneumatique de véhicule selon les caractéristiques de la revendication 1 ou 2,
dans lequel les blocs en caoutchouc (7, 8) sont limités dans la direction radiale R vers l'extérieur par une surface plane (9) et vers la rainure périphérique (2) par des flancs de blocs (10, 10', 10"), qui s'étendent dans la direction radiale R depuis le fond de rainure (5) jusqu'à la surface plane (9).

4. Pneumatique de véhicule selon les caractéristiques de la revendication 3,
dans lequel le contour de coupe (11) des flancs de blocs (10, 10', 10") avec la surface plane (9) est réalisé avec une allure polygonale, le contour de coupe (11) du côté orienté dans la direction axiale A à l'écart du flanc (3, 4) de la bande profilée (1) à laquelle est raccordé le bloc en caoutchouc (7, 8) présentant une portion (12) s'étendant en ligne droite dans la direction périphérique U du pneu.

5. Pneumatique de véhicule selon les caractéristiques de la revendication 4,
dans lequel le contour de coupe (11) dans la direction périphérique U avant et après la portion (12) s'étendant en ligne droite dans la direction périphérique U du pneu présente à chaque fois une portion rectiligne (13) orientée obliquement par rapport au flanc (3, 4) de la bande profilée (1) à laquelle est attaché le bloc en caoutchouc (7, 8).

6. Pneumatique de véhicule selon les caractéristiques de la revendication 4 ou 5,
dans lequel le contour de coupe (11) à partir du flanc (3, 4) de la bande profilée (1) à laquelle est attaché le bloc en caoutchouc (7, 8) présente à chaque fois une portion rectiligne (13) s'étendant dans la direction axiale.

7. Pneumatique de véhicule selon les caractéristiques de la revendication 3,
dans lequel le contour de coupe (11) des flancs de blocs (10, 10', 10") avec la surface plane (9) est réalisé avec une allure arrondie (14), en particulier en forme de segment de cercle.

8. Pneumatique de véhicule selon les caractéristiques d'une ou plusieurs des revendications 3 à 7,
dans lequel la surface plane (9), dans les plans de coupe présentant l'axe du pneu, présente à chaque fois un contour de coupe rectiligne qui descend dans la direction radiale R en formant un angle d'inclinaison α avec la direction axiale A tel que 0° ≤ α ≤ 45° depuis le flanc (3, 4) de la bande profilée (1), à laquelle est attaché le bloc en caoutchouc (7, 8), jusqu'au flanc de l'autre bande profilée (1).

9. Pneumatique de véhicule selon les caractéristiques de la revendication 1 ou 2,
dans lequel les blocs en caoutchouc (7, 8) sont réalisés en forme de segment de sphère.

10. Pneumatique de véhicule selon les caractéristiques d'une ou plusieurs des revendications précédentes,
dans lequel au moins une, en particulier deux, des bandes profilées (1) limitant la rainure périphérique (2) est une nervure périphérique (1).

11. Pneumatique de véhicule selon les caractéristiques d'une ou plusieurs des revendications précédentes,
dans lequel au moins une, en particulier deux, des bandes profilées limitant la rainure périphérique (2) est une rangée de blocs profilés (21).
